# EUROPEAN PATENT APPLICATION

(11) **EP 3 659 693 A1**
(43) Date of publication of application: **03.06.2020**
(21) Application number: 18209252.8
(22) Date of filing: 29.11.2018
(51) Int. Cl.: B01D 46/24, B01D 46/00, B03C 1/30, F25B 43/00, F24F 3/16, B01D 35/157, B01D 35/06, B01D 29/92

(54) **APPARATUS, SYSTEM AND METHOD FOR FILTERING A FLUID**

(71) Applicant: Vestel Elektronik Sanayi ve Ticaret A.S., 45030 Manisa (TR)
(72) Inventor: YALIN, Nevzat, 45030 Manisa (TR); KIRISKEN, Barbaros, 45030 Manisa (TR)
(74) Representative: Flint, Adam

(57) **Abstract**

An apparatus (100) for filtering a fluid (F) comprises an inner shell (130) inside which the fluid (F) circulates, a strainer (140) arranged inside the inner shell (130) and adapted to capture magnetic and non-magnetic particles contained in the fluid (F) when the fluid (F) passes through the strainer (140), and a magnet (120) arranged over the inner shell (130). The magnet (120) is adapted to attract magnetic particles contained in the fluid (F) circulating inside the inner shell (130) to the strainer (140) by exerting an attraction force resulting from a magnetic field created by the magnet, and retain the overall magnetic particles located in the strainer (140) by exerting the attraction force resulting from the magnetic field created by the magnet (120). The apparatus (100) may comprise a pad (160) arranged inside the inner shell (130) and containing a thermally expansive material which expands when its temperature increases, the pad (160) being adapted to narrow a size of the passageway of the fluid (F) inside the inner shell (130) upon expansion.

## Description

### Technical Field

The present disclosure relates to an apparatus, system and method for filtering a fluid.

### Background

Depending on the ambient conditions, air conditioning devices may contain a variety of vapours and gases as well as foreign bodies like welding beads, sealing materials, metal cuttings and rust, sludge, dust particles and so on. Although those impurities are filtered and kept in the suction filter of the compressor of the air conditioner, the vapours and gases pass directly through the pressurized air installation and can then be contaminated in their passage with such impurities. To avoid any possible premature wear of pneumatic devices of the pressurized air installation and any possible detrimental effect on the effective operation of the air conditioning, it then becomes necessary to filter those contaminated vapours and gases.

In the particular case of filters that can be installed downstream of oil spray compressors, a significant amount of oil sprayed by the compressor can be retained, thereby allowing oil-adhering metals and particles to be also retained in order to avoid any contamination in the pneumatic circuits. However, at the same time, the oil and those oil-adhering metals and particles from the compressor accumulate in the compressed air lines over time, thereby increasing the pressure loss caused by the narrowing hemispherical section.

Document JPH10137505 discloses an oil purification apparatus within an air compressing system, which purifies oil mixed with water based first on coarse filtering using a gravity difference between oil and water to coarsely separate each of both and second on fine filtering by means of a screen and a purification filter peripherally covered by a water-repellent porous material.

Thus, it becomes challenging to increase the performance of an air conditioning device in terms of filtering and heating.

### Summary

According to a first aspect disclosed herein, there may be provided an apparatus for filtering a fluid. The apparatus may comprise an inner shell inside which the fluid circulates, a strainer arranged inside the inner shell and adapted to capture magnetic and non-magnetic particles contained in the fluid when the fluid passes through the strainer, and a magnet arranged over the inner shell. The magnet may be adapted to attract the magnetic particles contained in the fluid circulating inside the inner shell to the strainer by exerting an attraction force resulting from a magnetic field created by the magnet and adapted to retain the overall magnetic particles located in the strainer by exerting the attraction force resulting from the magnetic field created by the magnet. Thereby, the fluid can be optimally cleaned of magnetic impurities after its passage inside the inner shell, which helps to protect downstream equipment and avoid unnecessary downtime for maintenance and repair.

In an example of the first aspect, the particles contained in the fluid may comprise welding beads, sealing materials, metal cuttings and rust, sludge, dust particles, grease, oil, lubricants, and so on. Those particles may be captured by the strainer when the fluid passes through the strainer and only those that are magnetic, such as ferromagnetic metals (e.g., iron, cobalt, nickel, alloys thereof, rare-earth metals, etc.), paramagnetic metals (e.g., platinum, tungsten, aluminium, magnesium, sodium, lithium, etc.) and ferrimagnetic materials (e.g., magnetite, etc.), may be magnetically retained in the strainer by the magnet, which allows the fluid to be cleaned of magnetic particles during its passage through the filtering apparatus.

In an example of the first aspect, the apparatus may comprise a pad arranged inside the inner shell and containing a thermally expansive material, which is adapted to thermally expand when its temperature increases, the pad being further arranged in such a manner that a size of the passageway of the fluid circulating inside the inner shell narrows when the thermally expansive material expands. Thereby, the pressure and the temperature of the fluid can increase.

In an example of the first aspect, the thermally expansive material may be a liquid, gas or vapour.

In an example of the first aspect, the thermally expansive material contained in the pad may have a high coefficient of thermal expansion. Thereby, the size expansion of the pad resulting from the thermal expansion of the thermally expansive material encapsulated in the pad can be high.

In an example of the first aspect, the thermally expansive material contained in the pad may comprise mercury.

In an example of the first aspect, the magnet may be a permanent magnet. Thereby, the magnetic particles can be permanently retained by the magnet in the strainer.

In an example of the first aspect, the magnet may comprise a plurality of individual magnets or a single magnet. Thereby, the design of the magnet can vary, for example, based on cost consideration, efficiency and manufacturing process.

In an example of the first aspect, the magnet may comprise a plurality of individual magnets or a single magnet. Thereby, the design of the magnet can vary, for example, based on cost consideration, efficiency and manufacturing process.

In an example of the first aspect, the pad may comprise a plurality of individual pads or a single pad. Thereby, the design of the pad can vary, for example, based on cost consideration, efficiency and manufacturing process.

In an example of the first aspect, the fluid may comprise at least one of a gas, a liquid and a vapour. The vapour may refer to a gas being at temperatures below its critical temperature.

In an example of the first aspect, the apparatus may comprise an outer shell arranged over the magnet and connected to a pipe inside which the fluid circulates. Thereby, the fluid circulating inside the inner shell can originate from the connected pipe.

In an example of the first aspect, at least one of the outer shell, the inner shell, the strainer, the magnet and the pad has a cylindrical shape.

In an example of the first aspect, the inner shell may be made of a material transparent to the magnetic field created by the magnet. Thereby, the magnetic field which is created by the magnet and arranged over the inner shell can seamlessly pass through the inner shell.

In an example of the first aspect, the strainer may comprise at least one of a perforated screen and a mesh screen. Thereby, an appropriate level of screen protection can be determined.

In an example of the first aspect, the strainer may comprise a corrosion-resistant alloy or metal. Thereby, the strainer can, for example, be stainless steel.

According to a second aspect disclosed herein, there may be provided an air conditioning system comprising an apparatus for filtering a fluid as claimed in any of the first aspect and the examples of the first aspect, wherein the fluid circulating inside the inner shell is a working fluid or a refrigerant. Thereby, the energy/thermal performance of the air conditioning system can be enhanced.

In an example of the second aspect, the air conditioning system may comprise a compressor adapted to supply the fluid to the apparatus. Thereby, the fluid entering the apparatus can be at high temperature under high pressure, and the compressor can be protected from premature degradation by reducing its compressor speed in order to hold a same energy/thermal performance of the air conditioning system. Thus, the increase in the pressure of the fluid circulating inside the inner shell can be achieved at a lower compressor speed in the presence of the apparatus than the compressor speed in the absence of the apparatus.

According to a third aspect disclosed herein, there may be provided a method of filtering a fluid circulating inside an inner shell. The method may comprise capturing magnetic and non-magnetic particles contained in the fluid when the fluid passes through a strainer arranged inside the inner shell, attracting the magnetic particles contained in the fluid circulating inside the inner shell to the strainer by exerting an attraction force resulting from a magnetic field created by a magnet arranged over the inner shell, and retaining the overall magnetic particles located in the strainer by exerting the attraction force resulting from the magnetic field created by the magnet.

In an example of the third aspect, the method may comprise narrowing a size of the passageway of the fluid circulating inside the inner shell when a temperature of a thermally expansive material contained in a pad increases, the pad being arranged inside the inner shell.

### Brief Description of the Drawings

To assist understanding of the present disclosure and to show how embodiments may be put into effect, reference is made by way of example to the accompanying drawings in which:
Figure 1 shows schematically an example of an external structure of a filtering apparatus according to the present disclosure, showing through a cutaway drawing an example arrangement of a plurality of individual magnets inside the filtering apparatus;
Figure 2 shows schematically an example of a cross-sectional view of an internal structure of a filtering apparatus according to the present disclosure, showing through a cutaway drawing an example arrangement of a strainer (figure 2A) and a plurality of individual magnets (figure 2B) inside the filtering apparatus;
Figure 3 shows schematically an example of a cross-sectional view of a filtering apparatus according to the present disclosure;
Figure 4 shows schematically an example of a cross-sectional view of a part of a filtering apparatus when a size of a pad begins to expand, according to the present disclosure;
Figure 5 shows schematically an example of a cross-sectional view of a part of a filtering apparatus when a size of a pad is expanded, according to the present disclosure; and
Figure 6 shows schematically an example of a cross-sectional view of an internal structure of a filtering apparatus according to the present disclosure, showing the passage of a fluid inside an inner shell in the presence of three individual magnets and pads.

### Detailed Description

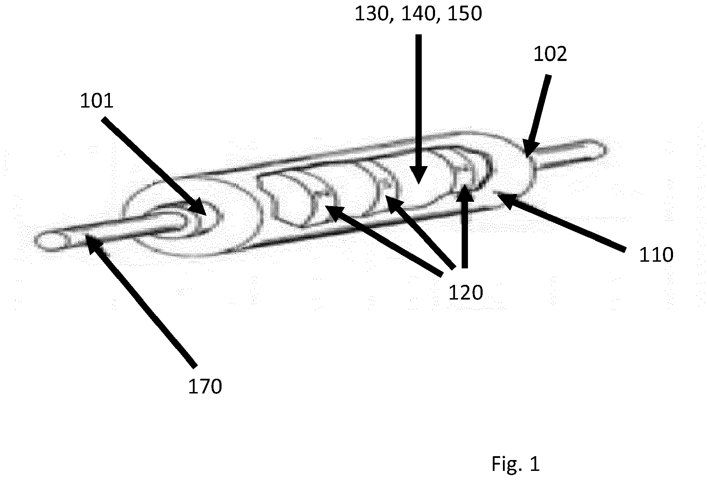

Figure 1 shows schematically an example of an external structure of a filtering apparatus 100 according to the present disclosure. The filtering apparatus 100 may comprise an outer shell 110, a magnet 120, an inner shell 130 and a strainer 140.

The outer shell 110 may be structurally robust while being possibly lightweight. It may also be flexible to be, for example, capable of rolling upon itself in the case of a cylindrical shape. It may be made, for example, of different types of metal (e.g., copper, aluminium) and/or alloy (e.g., steel).

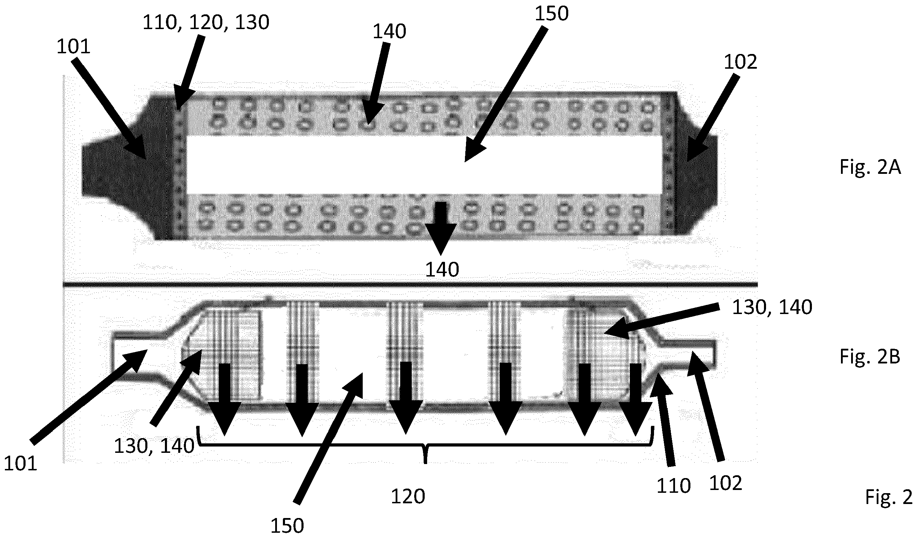

The magnet 120 may be arranged inside the outer shell 110 in such a manner that the magnet 120 may be arranged over the inner shell 130 between the inner portion of the outer shell 110 and the outer portion of the inner shell 130. The magnet 120 may be a permanent magnet, i.e., a magnet capable of creating its own persistent magnetic field and attracting to it magnetic particles such as ferromagnetic metals (e.g., iron, cobalt, nickel, alloys thereof, rare-earth metals, etc.), paramagnetic metals (e.g., platinum, tungsten, aluminium, magnesium, sodium, lithium, etc.) and ferrimagnetic materials (e.g., magnetite, etc.). The permanent magnet may be made, for example, of iron, cobalt, nickel or an alloy thereof. The magnet 120 may comprise a plurality of individual magnets (e.g., four or more magnets) distributed along the inner shell 130 or a single magnet extending over a length of the inner shell 130. In an example embodiment, the plurality of individual magnets may be distributed along the whole inner shell 130 (as depicted in figure 2B) and the single magnet may be extended over the entire length of the inner shell 130.

The inner shell 130 may be made of a material "magnetically" transparent to the magnetic field created by the magnet 120. Thus, the inner shell 130 may be a non-magnetic material (e.g., copper) allowing the magnetic field to seamlessly pass through the inner shell 130.

The strainer 140 may be arranged inside the inner shell 130 in such a manner that the outer portion of the strainer 140 may be arranged below the inner portion of the inner shell 130. The strainer 140 may, for example, comprise one of a perforated screen (also known as perforated sheet or perforated plate) as depicted in figure 2A and a mesh screen (also known as mesh sheet or mesh plate), and/or a combination thereof. The perforated screen may have a pattern of punched holes of identical or different diameters, and the mesh screen may have a pattern of openings of identical or different sizes. The perforated screen may be made from a woven wire gauze like a sieve. The diameter of the punched holes of the perforated screen and the size of the openings of the mesh screen may be adequately determined to allow magnetic and non-magnetic particles to pass through the strainer 140 and to be captured therein. For example, a finer screen protection may be obtained by reducing the diameter of the punched holes of the perforated screen and the size of the openings of the mesh screen. The strainer 140 may be structurally robust while being possibly lightweight. It may also be flexible to be, for example, capable of rolling upon itself in the case of a cylindrical shape and/or capable of shape-shifting. It may also be made of different types of metal (e.g., copper, aluminium) and/or alloy (e.g., steel). In an example embodiment, the strainer 140 may comprise a rust-resistant or corrosion-resistant alloy or metal such as stainless steel.

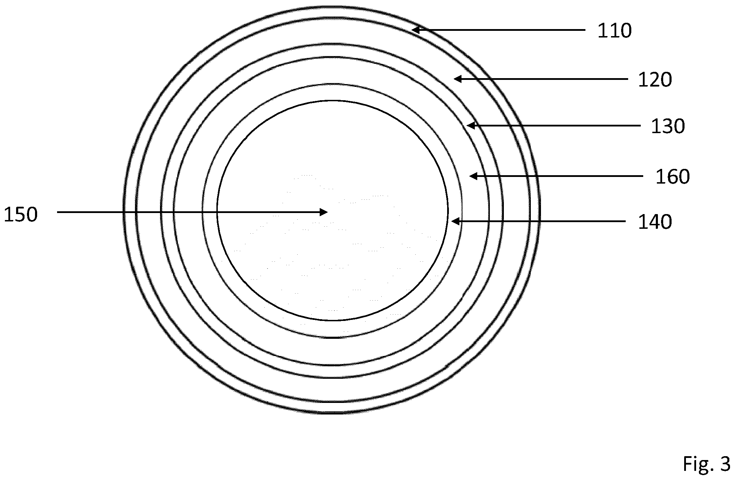

The outer shell 110, the magnet 120, the inner shell 130 and the strainer 140 may be of different shapes and in particular but without limitation, of cylindrical or ring shape, as depicted by the cross-sectional view of the filtering apparatus 100 of figure 3, in such a manner that the magnet 120 may be arranged between the circumferential inner portion of the outer shell 110 and the circumferential outer portion of the inner shell 130, the inner shell 130 may be arranged between the circumferential inner portion of the magnet 120 and the circumferential outer portion of the strainer 140, and the central portion 150 (also designated hereafter as central opening) may be arranged below the circumferential inner portion of the strainer 140.

As depicted in figure 1, the outer shell 110 may be connected through an inlet 101 and an outlet 102 of the filtering apparatus 100 to a pipe 170 inside which a fluid F circulates, in such a manner that the fluid F may circulate inside the inner shell 130. The fluid F may, for example, be one of a liquid, a gas and a vapour, and/or a mixture thereof, wherein the vapour refers to a gas being at temperatures below its critical temperature. Although preferably chosen non-corrosive to mechanical components, the fluid F may however contain magnetic and non-magnetic particles, which may contaminate the fluid F. Those particles may, for example, comprise welding beads, sealing materials, metal cuttings and rust, sludge, dust particles, grease, oil, lubricants, etc. and/or a combination thereof. In an example scenario, the fluid F may circulate inside the inner shell 130, and the magnet 120, which is located over the "magnetically" transparent inner shell 130, may attract to it the magnetic particles contained in the fluid F circulating through the central opening 150 and the strainer 140 inside the inner shell 130. Thus, the magnetic and non-magnetic particles contained in the fluid F may be trapped directly by the strainer 140 when the fluid F circulates through the strainer 140, whereas only the magnetic particles may be attracted to the strainer 140 due to the magnetic field exerted by the magnet 120 and trapped therein when the fluid F circulates through the central opening 150 of the inner shell 130. Among the particles captured in the strainer 140, only the magnetic particles will be firmly held or retained in the strainer 140 thanks to the magnetic field exerted by the magnet 120, whereas the non-magnetic particles may be capable of escaping from the strainer 140 by passing back through the strainer openings due to fluid streaming or motion. Thereby, the fluid F can be optimally cleaned of magnetic impurities after its passage inside the inner shell 130 through the filtering apparatus 100, which helps to protect downstream equipment and avoid unnecessary downtime for maintenance and repair.

In the example case where the filtering apparatus 100 is implemented in an air conditioning (AC) system, the fluid F may be used in a heat pump and refrigeration cycle and designated as working fluid or refrigerant. The fluid F may have favourable thermodynamic properties and be safe in terms of toxicity and flammability. The fluid F circulating inside the pipe 170 and the inner shell 130 may be a gas or a vapour like, for example, a hydrofluorocarbon (HFC) gas/vapour (e.g., R410A), which has an insignificant ozone depletion potential. The fluid F may be provided upstream by a compressor of the AC system, which operates at a speed (also designated hereafter as compressor speed) in such a manner that the fluid F outputting from the compressor and entering the filtering apparatus 100 be a hot gas/vapour under high pressure. The filtering apparatus 100 may be arranged in a so-called discharge line between the compressor and a condenser of the AC system so as to carry the fluid F from the outlet of the compressor to the inlet of the condenser. The filtering apparatus 100 may further comprise a pad 160 arranged inside the inner shell 130. The pad 160 may comprise one or more individual pads distributed along the inner shell 130. The pad 160 may contain a thermally expansive material in the form of liquid, gas or vapour, which is stationary while being hermetically encapsulated therein and capable of expanding and contracting in all directions with changes in pressure and/or temperature. The pad 160 shall be made of an expandable or extendible material to allow its size expansion when the thermally expansive material contained in the pad 160 expands thermally. Thereby, the pad 160 can maintain the thermally expansive material securely when the thermal expansion of the thermally expansive material occurs. It shall be noted that the term "stationary" related to the thermally expansive material contained in the pad 160 is used in the present disclosure as opposed to the term "circulating" related to the fluid F. Expansion occurs when the pressure and/or the temperature increase(s), whereas contraction occurs when the pressure and/or the temperature decrease(s). This thermally expansive material contained in the pad 160 may have a high coefficient of thermal expansion (CTE) and may, for example and without limitation, be liquid or gaseous mercury. The pad 160 may be arranged inside the inner shell 130 in such a manner that its size expansion narrows the size of the passageway of the fluid F inside the inner shell 130. The size expansion of the pad 160 results from the thermal expansion of the thermally expansive material contained in the pad 160 due to the passage of the hot fluid F (i.e., the hot gas/vapour under high pressure) inside the inner shell 130. Such narrowing of the passageway leads to an increase in the pressure and temperature of the fluid F circulating inside the inner shell 130 with respect to the fluid F output from the compressor. Thus, the presence of the filtering apparatus 100 can allow to protect the compressor (e.g., from premature degradation) by reducing its compressor speed in order to hold a same energy/thermal performance of the AC system. Thereby, the increase in the pressure of the fluid F circulating inside the inner shell 130 can be achieved at a lower compressor speed in the presence of the filtering apparatus 100 than the compressor speed in the absence of the filtering apparatus 100. On the other hand, in the case where the compressor speed is hold unchanged (i.e., in the case where the compressor speed is not lower), the narrowing of the passageway can allow the energy/thermal performance of the AC system to be enhanced due to the increase in the pressure and temperature of the fluid F circulating inside and outputting from the filtering apparatus 100. The pad 160 may be of different shapes adapted to allow the narrowing of the passageway of the fluid F when heating, and in particular but without limitation, of cylindrical or ring shape as depicted by the cross-sectional view of the filtering apparatus 100 of figure 3. In the example embodiment of figure 3, the pad 160 may be arranged between the inner portion of the inner shell 130 and the outer portion of the strainer 140.

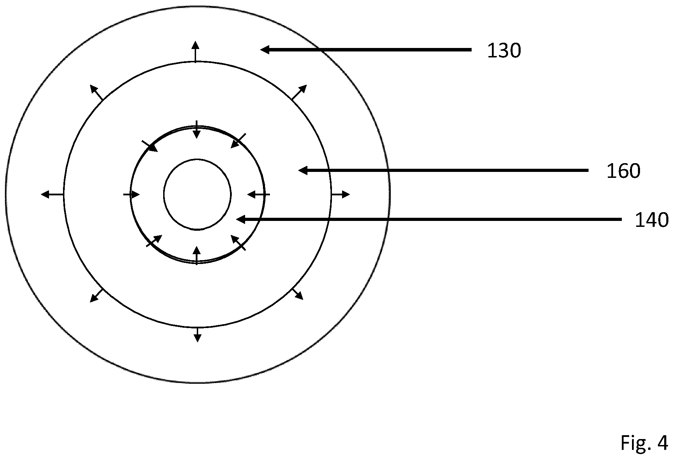

Figure 4 shows schematically an example of a cross-sectional view of a part of the filtering apparatus 100 when the size of the pad 160 begins to expand, according to the present disclosure. The part of the filtering apparatus 100 depicts the pad 160 of cylindrical or ring shape, which is arranged between and around the outer portion of the strainer 140 and the inner portion of the inner shell 130 in such a manner that a gap or interstitial region is established between the strainer 140 and the inner shell 130. In figure 4, the gap or interstitial region is established between the pad 160 and the inner portion of the inner shell 130. The fluid F circulating inside the inner shell 130 may then circulate through the passageway formed by the gap or interstitial region, the strainer 140 and the central opening 150 that is the portion lying below the inner portion of the strainer 140. When the thermally expansive material contained in the pad 160 begins to thermally expand in all directions due to the passage of the hot fluid F, it causes the size of the pad 160 to expand in the same directions, and in particular in the axial direction towards the strainer 140 and the inner shell 130 (as schematically depicted by the small arrows), thereby reducing the gap or interstitial region and therefore the size of the passageway of the fluid F.

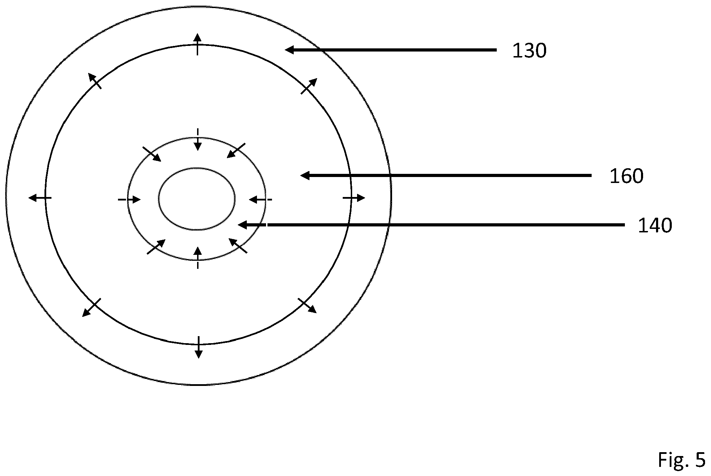

Figure 5 shows schematically an example of a cross-sectional view of a part of the filtering apparatus 100 when the size of the pad 160 is expanded, according to the present disclosure. The part of the filtering apparatus 100 depicts the pad 160 of cylindrical or ring shape, which is arranged between and around the outer portion of the strainer 140 and the inner portion of the inner shell 130 in such a manner that the gap or interstitial region established between the strainer 140 and the inner shell 130 is closed. In figure 5, the gap or interstitial region established between the pad 160 and the inner portion of the inner shell 130 is closed, thereby preventing the fluid F from passing through the gap or interstitial region. The size of the passageway of the fluid F becomes smaller causing the fluid F to circulate through the strainer 140 and the central opening 150.

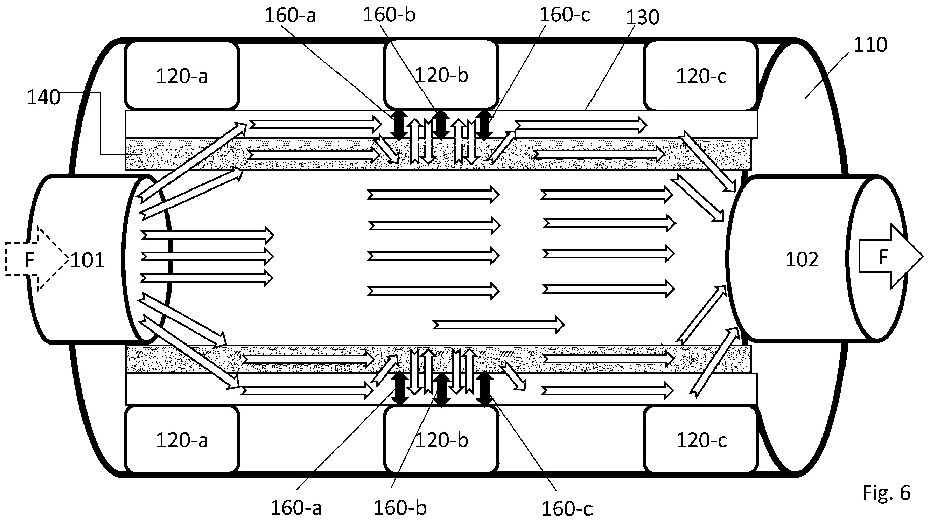

Figure 6 shows schematically an example of a cross-sectional view of an internal structure of the filtering apparatus 100 according to the present disclosure, showing the passage of the fluid F inside the inner shell 130 in the presence of three individual magnets 120 (i.e., 120-a, 120-b, 120-c) and pads 160 (i.e., 160-a, 160-b, 160-c). The individual magnets 120 and pads 160 may be of cylindrical or ring shape. As depicted therein, the pads 160 are arranged between and around the outer portion of the strainer 140 and the inner portion of the inner shell 130, and are size-expanded in such manner that the passageway of the fluid F through these pads 160 is obstructed due to the gap or interstitial region closure. It results therefrom that the size of the passageway of the fluid F is reduced at the location of each of the individual pads 160 causing the pressure and temperature of the fluid F to increase.

To summarise, the present disclosure relates to an enhanced filtering apparatus 100, which is capable of cleaning impurities out of a contaminated fluid F and which is also capable of increasing the heating performance of an AC system. The apparatus 100, which filters the fluid F, may comprise an inner shell 130 inside which the fluid F circulates, a strainer 140 arranged inside the inner shell 130 and adapted to capture magnetic and non-magnetic particles contained in the fluid F when the fluid F passes through the strainer 140, and a magnet 120 arranged over the inner shell 130. The magnet 120 is adapted to attract magnetic particles contained in the fluid F circulating inside the inner shell 130 to the strainer 140 by exerting an attraction force resulting from a magnetic field created by the magnet 120, and retain the overall magnetic particles located in the strainer 140 by exerting the attraction force resulting from the magnetic field created by the magnet 120. Thereby, the fluid F can be optimally cleaned of magnetic impurities after its passage inside the inner shell 130, which helps to protect downstream equipment and avoid unnecessary downtime for maintenance and repair. In the case of an implementation of the apparatus 100 in said AC system, the apparatus 100 may further comprise a pad 160 arranged inside the inner shell 130 and containing a thermally expansive material capable of thermally expanding when its temperature increases owing to the passage of the circulating fluid F as a hot fluid provided by a compressor of the AC system. Thereby, the size of the passageway of the fluid F inside the inner shell 130 narrows causing an increase in the pressure and temperature of the fluid F. The compressor speed can then be reduced to hold a same energy/thermal performance of the AC system, so that the increase in the pressure of the flux F circulating inside the filtering apparatus 100 can occur at a lower compressor speed.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An apparatus (100) for filtering a fluid (F), wherein the apparatus (100) comprises:
an inner shell (130) inside which the fluid (F) circulates;
a strainer (140) arranged inside the inner shell (130) and adapted to capture magnetic and non-magnetic particles contained in the fluid (F) when the fluid (F) passes through the strainer (140); and
a magnet (120) arranged over the inner shell (130) and adapted to:
attract the magnetic particles contained in the fluid (F) circulating inside the inner shell (130) to the strainer (140) by exerting an attraction force resulting from a magnetic field created by the magnet (120); and
retain the overall magnetic particles located in the strainer (140) by exerting the attraction force resulting from the magnetic field created by the magnet (120).

2. The apparatus (100) of claim 1, wherein the apparatus (100) comprises:
a pad (160) arranged inside the inner shell (130) and containing a thermally expansive material, which is adapted to thermally expand when its temperature increases, the pad (160) being further arranged in such a manner that a size of the passageway of the fluid (F) circulating inside the inner shell (130) narrows when the thermally expansive material expands.

3. The apparatus (100) of claim 2, wherein the thermally expansive material contained in the pad (160) has a high coefficient of thermal expansion.

4. The apparatus (100) of claim 2 or 3, wherein the thermally expansive material contained in the pad (160) comprises mercury.

5. The apparatus (100) of any of claims 1 to 4, wherein the magnet (120) is a permanent magnet.

6. The apparatus (100) of any of claims 1 to 5, wherein the magnet (120) comprises a plurality of individual magnets or a single magnet.

7. The apparatus (100) of any of claims 1 to 6, wherein the fluid (F) comprises at least one of a gas, a liquid and a vapour.

8. The apparatus (100) of any of claims 1 to 7, wherein the apparatus (100) comprises:
an outer shell (110) arranged over the magnet (120) and connected to a pipe (170) inside which the fluid (F) circulates.

9. The apparatus (100) of any of claims 2 to 8, wherein at least one of the outer shell (110), the inner shell (130), the strainer (140), the magnet (120) and the pad (160) has a cylindrical shape.

10. The apparatus (100) of any of claims 1 to 9, wherein the inner shell (130) is made of a material transparent to the magnetic field created by the magnet (120).

11. The apparatus (100) of any of claims 1 to 10, wherein the strainer (140) comprises at least one of a perforated screen and a mesh screen.

12. An air conditioning system comprising:
an apparatus (100) for filtering a fluid (F) as claimed in any of claims 1 to 11, wherein the fluid (F) circulating inside the inner shell (130) is a working fluid or a refrigerant.

13. The air conditioning system of claim 12, wherein the air conditioning system comprises:
a compressor adapted to supply the fluid (F) to the apparatus (100).

14. A method of filtering a fluid (F) circulating inside an inner shell (130), wherein the method comprises:
capturing magnetic and non-magnetic particles contained in the fluid (F) when the fluid (F) passes through a strainer (140) arranged inside the inner shell (130);
attracting the magnetic particles contained in the fluid (F) circulating inside the inner shell (130) to the strainer (140) by exerting an attraction force resulting from a magnetic field created by a magnet (120) arranged over the inner shell (130); and
retaining the overall magnetic particles located in the strainer (140) by exerting the attraction force resulting from the magnetic field created by the magnet (120).

15. The method of claim 14, wherein the method comprises:
narrowing a size of the passageway of the fluid (F) circulating inside the inner shell (130) when a temperature of a thermally expansive material contained in a pad (160) increases, the pad (160) being arranged inside the inner shell (130).
